(19) **Europäisches Patentamt / European Patent Office / Office européen des brevets**

(11) **EP 4 692 505 A1**

(12) **EUROPEAN PATENT APPLICATION**
published in accordance with Art. 153(4) EPC

(43) Date of publication:
**11.02.2026   Bulletin 2026/07**

(21) Application number: **23931689.6**

(22) Date of filing: **12.07.2023**

(51) International Patent Classification (IPC):
**E21B 47/00** *(2012.01)*

(52) Cooperative Patent Classification (CPC):
**G01V 3/38; G01V 3/18;** Y02A 90/30

(86) International application number:
**PCT/CN2023/106889**

(87) International publication number:
**WO 2024/207639 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority:   **04.04.2023   CN 202310355915**

(71) Applicant: **China Oilfield Services Ltd.
Tianjin 300459 (CN)**

(72) Inventors:
 • **WANG, Meng
  Tianjin 300459 (CN)**
 • **LI, Xuan
  Tianjin 300459 (CN)**
 • **GAO, Yongde
  Tianjin 300459 (CN)**
 • **LIU, Zhijie
  Tianjin 300459 (CN)**
 • **JIANG, Yiming
  Tianjin 300459 (CN)**
 • **LIU, Haibo
  Tianjin 300459 (CN)**
 • **ZHANG, Zhiqiang
  Tianjin 300459 (CN)**
 • **HE, Yuchun
  Tianjin 300459 (CN)**
 • **DONG, Yu
  Tianjin 300459 (CN)**
 • **WU, Lejun
  Tianjin 300459 (CN)**
 • **YIN, Lu
  Tianjin 300459 (CN)**
 • **ZHANG, Chaohua
  Tianjin 300459 (CN)**

(74) Representative: **RGTH
Patentanwälte PartGmbB
Neuer Wall 10
20354 Hamburg (DE)**

(54) **RESISTIVITY LOGGING-BASED OIL-GAS WELL SKIN FACTOR CALCULATION METHOD AND RELATED APPARATUS**

(57)     The present disclosure discloses a method for calculating a skin factor for an oil and gas well based on resistivity logging and a related apparatus, wherein the method includes: acquiring resistivity log information and well test skin factor data of a target zone of an oil and gas field; establishing a skin factor calculation model according to the resistivity log information and the well test skin factor data; and calculating the skin factor of a well to be tested of the oil and gas field according to the skin factor calculation model.

Fig. 1

**Description**

**CROSS REFERENCE TO RELATED APPLICATIONS**

The present application claims priority to the Chinese patent application titled "Method for Calculating a Skin Factor for an Oil and Gas Well based on Resistivity Logging and Related apparatus", filed with the Chinese Patent Office on April 4, 2023, with the application number of 2023103559153, the entire contents of which are incorporated herein by reference.

**TECHNICAL FIELD**

The present disclosure relates to the field of oil and gas field development, and specifically relates to a method and an apparatus for calculating a skin factor for an oil and gas well based on resistivity logging, a computing device and a computer storage medium.

**BACKGROUND**

In the field of oil and gas field development, the skin factor is one of the very important parameters in production capacity prediction stage. However, the value of the skin factor is often difficult to predict, which makes it difficult to predict production capacity of oil and gas wells. The method for predicting the skin factor of an oil and gas well is generally to decompose the skin factor into various types of skin factors under different influence condition such as drilling well contamination skin, injection hole skin, well inclination skin, etc., then to establish calculation models for various types of skin factors, and finally to obtain the skin factor by summing up the various types of skin factors. Currently, a value of a total skin factor can only be accurately acquired by the method of combining drill stem test with well test analysis. The difficulty of the above-mentioned method for acquiring the skin factor lies in that, the calculation models of the various types of skin factors need to determine many process parameters that are difficult to acquire, such as the radius of the contaminated zone, the penetration depth of the injection hole, the thickness of the compaction zone, etc., which requires a large amount of detailed information on production processes as a support, but the cost of drill stem test is high, and it is usually used as a comparative validation of the result of the modeling calculation and is not used for prediction of the skin factor.

Therefore, developing a simple, fast and more accurate method for predicting the skin factor is particularly important for production capacity prediction.

**SUMMARY**

In view of the above-mentioned problems, the present disclosure is proposed in order to provide a method and an apparatus for calculating a skin factor for an oil and gas well based on resistivity logging, a computing device and a computer storage medium for overcoming the above-mentioned problems of low accuracy of the calculation of the skin factor and the complex process parameters required.

According to one aspect of the present disclosure, a method for calculating a skin factor for an oil and gas well based on resistivity logging is provided, which includes:

acquiring resistivity log information and well test skin factor data of a target zone of an oil and gas field;
establishing a skin factor calculation model according to the resistivity log information and the well test skin factor data;
calculating the skin factor of a well to be tested of the oil and gas field according to the skin factor calculation model.

According to another aspect of the present disclosure, an apparatus for calculating a skin factor for an oil and gas well based on resistivity logging is provided, which includes:

a data acquisition module configured to acquire resistivity log information and well test skin factor data of a target zone of an oil and gas field;
a model establishment module configured to establish a skin factor calculation model according to the resistivity log information and the well test skin factor data;
a calculation module configured to calculate the skin factor of a well to be tested of the oil and gas field according to the skin factor calculation model.

According to yet another aspect of the present disclosure, a computing device is provided, which includes: a processor, a memory, a communication interface and a communication bus, wherein the processor, the memory and the communication interface accomplish communication with each other via the communication bus;

the memory is configured to store at least one executable instruction, wherein the executable instruction causes the processor to perform operations corresponding to the above described method for calculating a skin factor for an oil and gas well based on resistivity logging.

According to still another aspect of the present disclosure, a non-volatile computer readable storage medium is provided, in which at least one executable instruction is stored, wherein the executable instruction causes a processor to perform operations corresponding to the above described method for calculating a skin factor for an oil and gas well based on resistivity logging. According to still yet another aspect of the present disclosure, a computer program product is further provided, which includes a computing program stored on the above described non-volatile computer readable storage medium.

According to the solution provided by the present disclosure, resistivity log information and well test skin factor data of a target zone of an oil and gas field are acquired; a skin factor calculation model is established according to the resistivity log information and the well test skin factor data; and the skin factor of a well to be tested of the oil and gas field is calculated according to the skin factor calculation model. In the present disclosure, the skin factor calculation model is established by using the resistivity log information and the well test skin factor data of the target zone of the oil and gas field, and the skin factor of the well to be tested of the oil and gas field is calculated according to the model, so that more accurate production capacity prediction is provided for the field of oil and gas field production and development, and determination of various types of process parameters and complex calculation procedure of the skin factor model are avoided, which effectively solves the problem that the skin factor is difficult to be determined in the process of actual production and development.

The above description is only an overview of the technical solution of the present disclosure, in order to be able to more clearly understand the technical means of the present disclosure, which can be implemented in accordance with the contents of the specification, and in order to make the above and other purposes, features and advantages of the present disclosure more obvious and easy to understand, the specific embodiment of the present disclosure will be given in the following.

## BRIEF DESCRIPTION OF THE DRAWINGS

Various other advantages and benefits will become clear to those of ordinary skill in the art by reading the detailed description of the preferred embodiments below. The accompanying drawings are for the purpose of illustrating the preferred embodiments only and are not considered a limitation of the present disclosure. And throughout the accompanying drawings, the same reference symbols are used to denote the same parts. In the drawings:

FIG. 1 illustrates a schematic flow diagram of a method for calculating a skin factor for an oil and gas well based on resistivity logging according to an embodiment of the present disclosure;

FIG. 2 illustrates a schematic flow diagram of a method for calculating a skin factor for an oil and gas well based on resistivity logging according to another embodiment of the present disclosure;

FIG. 3 illustrates a schematic diagram of the relationship curve between a well test skin S and a difference ($R_D$-$R_{MSL}$) between resistivity for an oil and gas field A according to an embodiment of the present disclosure;

FIG. 4 illustrates a schematic diagram of the relationship curve between a well test skin S and a difference ($R_D$-$R_S$) between resistivity for an oil and gas field A according to an embodiment of the present disclosure;

FIG. 5 illustrates a schematic diagram of the effect comparison between a well test skin S and the regression model for an oil and gas field A according to an embodiment of the present disclosure;

FIG.6 illustrates a schematic diagram of the effect comparison between a well test skin S and the regression model S2 for an oil and gas field A according to an embodiment of the present disclosure;

FIG. 7 illustrates a schematic structural diagram of an apparatus for calculating a skin factor for an oil and gas well based on resistivity logging according to an embodiment of the present disclosure; and

FIG. 8 illustrates a schematic structural diagram of a computing device according to an embodiment of the present disclosure.

## DETAILED DESCRIPTION

Exemplary embodiments of the present disclosure will be described in greater detail below with reference to the accompanying drawings. Although exemplary embodiments of the present disclosure are shown in the accompanying drawings, it should be understood that the present disclosure may be realized in various forms without being limited by the embodiments set forth herein. Rather, these embodiments are provided to enable a more thorough understanding of the present disclosure and to enable a complete communication of the scope of the present disclosure to those skilled in the art.

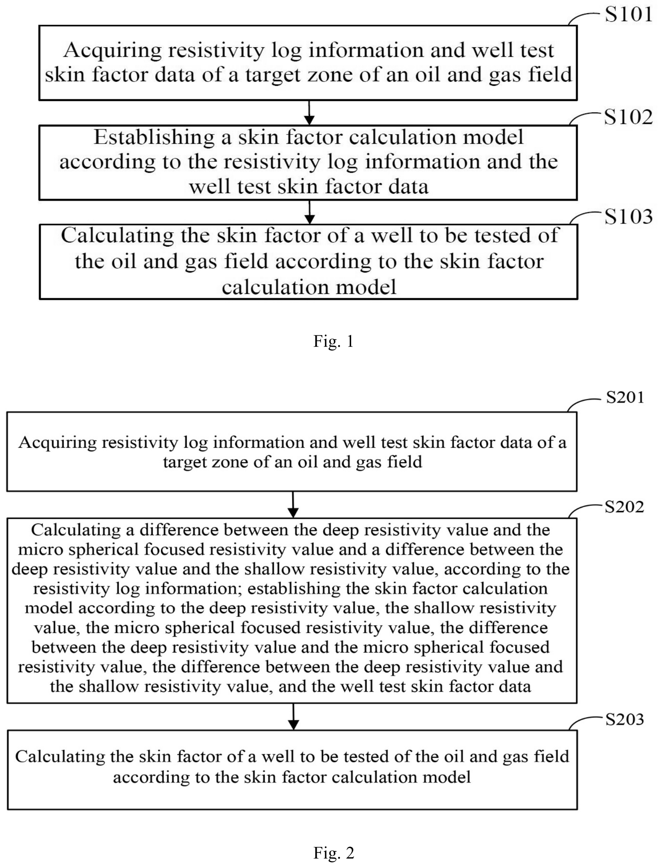

FIG. 1 illustrates a schematic flow diagram of a method for calculating a skin factor for an oil and gas well based on resistivity logging according to an embodiment of the present disclosure. The present method is based on resistivity log information that can reflect actual stratigraphic contamination and combines well test skin factor data to establish a universally applicable skin factor calculation model of oil and gas wells. Specifically, as shown in FIG. 1, the method includes the following steps.

Step S101, acquiring resistivity log information and well test skin factor data for a target zone of an oil and gas field.

Through research and analysis, resistivity logging in logging technology can qualitatively reflect the condition of stratigraphic mud contamination. In order to establish the skin factor calculation model, i.e., the calculation model for calculating the well test skin factor by resistivity log information, it is firstly needed to acquire the resistivity log information and the well test skin factor data for a target zone of the oil and gas field. For example, resistivity log information and well test skin factor data for a target zone of an offshore oil and gas field A are acquired and statistically counted.

Step S102, establishing a skin factor calculation model according to the resistivity log information and the well test skin factor data.

Specifically, the well test skin factor data is used as the dependent variable, the various resistivity values from the resistivity log information are used as the independent variables, and the skin factor calculation model is established by fitting according to a causal relationship between the plurality of independent variables and the dependent variables.

The skin factor calculation model may be a multiple linear regression model, such as:

$$h_\theta(x) = \theta_0 + \theta_1 x_1 + \theta_2 x_2 + \theta_3 x_3 \quad (1-1)$$

where $h_\theta(x)$ denotes the dependent variables, $x_1$, $x_2$, $x_3$ denote the independent variables, $\theta_0$ denotes the bias, and $\theta_1$, $\theta_2$, $\theta_3$ denote weight coefficients or regression coefficients of the independent variables.

Step S103, calculating the skin factor for a well to be tested of the oil and gas field according to the skin factor calculation model.

The various resistivity values from the resistivity log information of the well to be tested are input into the skin factor calculation model to calculate the skin factor for the well to be tested of the oil and gas field.

According to the technical solution provided by the above described embodiment of the present disclosure, resistivity log information and well test skin factor data for a target zone of an oil and gas field are acquired; a skin factor calculation model is established according to the resistivity log information and the well test skin factor data; and the skin factor for a well to be tested of the oil and gas field is calculated according to the skin factor calculation model. In the present disclosure, the skin factor calculation model is established by using the resistivity log information and the well test skin factor data for the target zone of the oil and gas field, and the skin factor for the well to be tested of the oil and gas field is calculated according to the model, so that more accurate production capacity prediction is provided for the field of oil and gas field production and development, and determination of various types of process parameters and complex calculation procedure of the skin factor model are avoided, which effectively solves the problem that the skin factor is difficult to be determined in the process of actual production and development.

FIG. 2 illustrates a schematic flow diagram of a method for calculating a skin factor for an oil and gas well based on resistivity logging according to another embodiment of the present disclosure. Specifically, as shown in FIG. 2, the method includes the following steps.

Step S201, acquiring resistivity log information and well test skin factor data of a target zone of an oil and gas field.

Through a large number of experiments and analyses, it is found that deep resistivity value $R_D$, shallow resistivity value $R_S$, and micro spherical focused resistivity value $R_{MSL}$ are able to qualitatively reflect the condition of stratigraphic mud contamination. Therefore, in the embodiment of the present disclosure, the acquired resistivity log information comprises at least one of the following: a deep resistivity value, a shallow resistivity value, and a micro spherical focused resistivity value.

Step S202, calculating a difference between the deep resistivity value and the micro spherical focused resistivity value and a difference between the deep resistivity value and the shallow resistivity value, according to the resistivity log information; establishing the skin factor calculation model according to the deep resistivity value, the shallow resistivity value, the micro spherical focused resistivity value, the difference between the deep resistivity value and the micro spherical focused resistivity value, the difference between the deep resistivity value and the shallow resistivity value, as well as the well test skin factor data.

Specifically, according to the resistivity log information, the difference between the deep resistivity value and the micro spherical focused resistivity value and the difference between the deep resistivity value and the shallow resistivity value are calculated.

For example, according to the statistical data of the average resistivity and the well test skin factors of the target zone of the offshore oil and gas field A (some wells have no micro spherical focused resistivity value), the difference between the deep resistivity value $R_D$ and the micro spherical focused resistivity value $R_{MSL}$ and the difference between the deep resistivity value $R_D$ and the shallow resistivity value $R_S$ are calculated.

For a better understanding of the resistivity log information in the present embodiment, some of the raw log example data for an oil and gas field A involved is as shown in Table 1:

Table 1: Some of Raw Log Example Data for Oil and Gas Field A

| serial number of well | well test skin | micro spherical resistivity $R_{MSL}$ | shallow resistivity $R_S$ | deep resistivity $R_D$ | $R_D-R_{MSL}$ | $R_D-R_S$ | remarks |
|---|---|---|---|---|---|---|---|
| 1 | 78.8 | 4.601 | 15.2129 | 41.8457 | 37.2447 | 26.6328 | Contaminated |
| 2 | -1.07 | 4.7074 | 11.6097 | 15.6461 | 10.9387 | 4.0364 | Improved |
| 3 | 34 | 5.6423 | 8.3044 | 29.0739 | 23.4316 | 20.7695 | Contaminated |
| 4 | 22.3 | 4.8 | 5.3769 | 14.3203 | 9.5203 | 8.9434 | Contaminated |
| 5 | -1.63 | 13.2527 | 15.1337 | 16.164 | 2.9113 | 1.0303 | Improved |
| 6 | -3.679 | 16.4382 | 21.9680 | 27.5511 | 11.1129 | 5.5831 | Improved |
| 7 | 26.8 | 3.6152 | 9.417 | 23.0196 | 19.4044 | 13.6026 | Contaminated |
| 8 | 3.51 | 12.0383 | 16.8024 | 17.964 | 5.9257 | 1.1616 | Contaminated |
| 9 | 18 | 23.2939 | 40.2314 | 43.653 | 20.3591 | 3.4216 | Contaminated |
| 10 | 2.2 | 30.6853 | 30.2903 | 29.1531 | -1.5322 | -1.1372 | Contaminated |
| 11 | 4.2 | 62.0239 | 59.8349 | 59.8893 | -2.1346 | 0.0544 | Contaminated |
| 12 | 10.1 | / | 19.4057 | 21.9138 | / | 2.5081 | Contaminated |
| 13 | 85.1 | / | 57.3676 | 93.5222 | / | 36.1546 | Contaminated |
| 14 | -3.73 | 0.8454 | 5.1493 | 5.4195 | 4.5741 | 0.2702 | Improved |
| 15 | 120 | 2.4501 | 32.9704 | 66.7398 | 64.2897 | 33.7694 | Contaminated |
| 16 | 14.5 | 2.5678 | 7.8401 | 14.4141 | 11.8463 | 6.574 | Contaminated |
| 17 | 31.4 | 11.775 | 38.0013 | 44.5025 | 32.7275 | 6.5012 | Contaminated |
| 18 | 45.48 | 0.6964 | 13.1892 | 27.5882 | 26.8918 | 14.399 | Contaminated |
| 19 | 6.87 | 16.7623 | 17.2995 | 17.2260 | 0.4637 | -0.0735 | Contaminated |
| 20 | 36.8 | 1.5585 | 8.1198 | 15.8671 | 14.3086 | 7.7473 | Contaminated |
| 21 | 8.3 | 4.4028 | 12.1776 | 19.3139 | 14.9111 | 7.1363 | Contaminated |
| 22 | 7.27 | / | 9.3105 | 16.0984 | / | 6.7879 | Contaminated |
| 23 | -2.57 | / | 16.9978 | 17.6806 | / | 0.6828 | Improved |
| 24 | 46.5 | 2.6072 | 10.9481 | 24.3897 | 21.7825 | 13.4416 | Contaminated |

Further, the skin factor calculation model is established according to the difference between the deep resistivity value and the micro spherical focused resistivity value, the difference between the deep resistivity value and the shallow resistivity value, as well as the well test skin factor data.

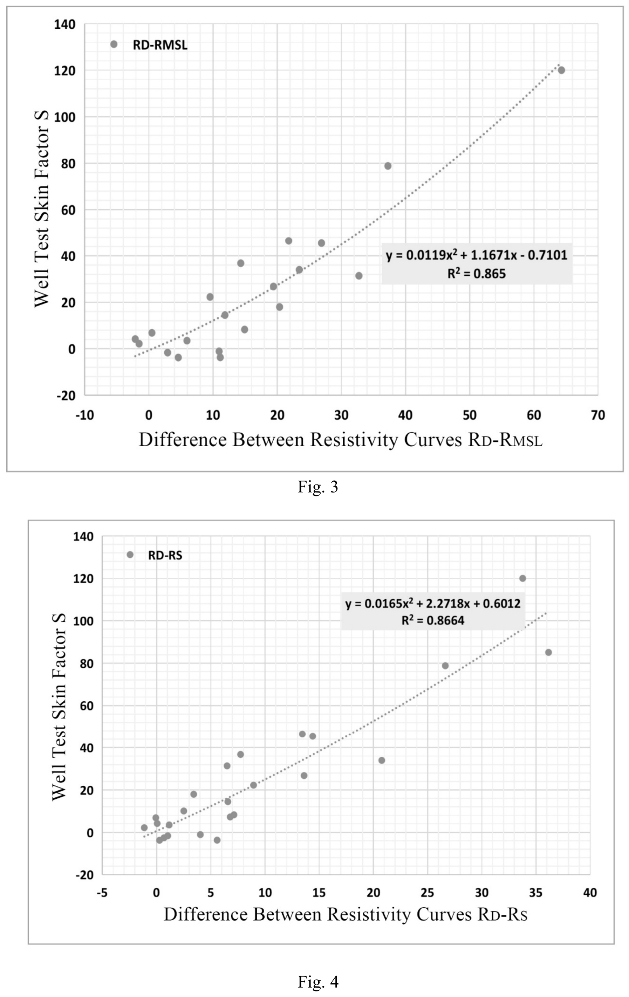

As shown in FIG. 3 and FIG. 4, scatterplots are plotted for the difference between the deep resistivity value and the micro spherical focused resistivity value, the difference between the deep resistivity value and the shallow resistivity value, as well as the corresponding well test skin factor data respectively. As can be seen from the scatterplots, there is a linear relationship between the well test skin factor S and the difference between the deep resistivity value and the micro spherical focused resistivity value ($R_D-R_{MSL}$), and there is also a linear relationship between the well test skin factor S and the difference between the deep resistivity value and the shallow resistivity value ($R_D-R_S$).

By using the well test skin factor as the dependent variable, and using respectively the difference between the deep resistivity value and the micro spherical focused resistivity value ($R_D-R_{MSL}$) and the difference between the deep resistivity value and the shallow resistivity value ($R_D-R_S$) as the independent variables, multiple linear regression fitting is conducted, and the relationship fitted table obtained according to the preset correlation $R^2$ is as shown in Table 2.

Table 2: Relationship Fitted Table between Well Test Skin S and difference ΔR of Respective Resistivity Values for Oil and Gas Field A

| ΔR | Trend | Relational Equation | Correlation $R^2$ |
|---|---|---|---|
| $R_D$-$R_{MSL}$ | Linear | y=1.8154x-5.3839 | 0.8454 |
| | Binomial | y=0.0119x$^2$+1.1671x-0.7107 | 0.8650 |
| $R_D$-$R_S$ | Linear | y=2.8025x-0.8274 | 0.8665 |
| | Binomial | y=0.0148x$^2$+2.3208x+0.7787 | 0.8691 |

From the fitted curves in FIG. 3 and FIG. 4 and the correlation R2 in the corresponding Table 2, it can be seen that there are good linear and polynomial relationships between the well test skin S and the differences ΔR ($R_D$-$R_{MSL}$, $R_D$-$R_S$) between the resistivity values, wherein the correlation $R^2$ for the polynomial relationships are all above 0.86.

Even further, the skin factor calculation model is established according to the deep resistivity value, the shallow resistivity value, the micro spherical focused resistivity value, the difference between the deep resistivity value and the micro spherical focused resistivity value, the difference between the deep resistivity value and the shallow resistivity value, as well as the well test skin factor data.

In an optional implementation, linear regression fitting is conducted on the deep resistivity value, the shallow resistivity value, the micro spherical focused resistivity value and the well test skin factor data, to obtain a first regression relational equation.

Since there is a good linear relationship between the well test skin and the respective resistivity values, a multiple linear regression equation between the well test skin and the resistivity values can be established as follows:

$$S_1 = a_1 R_{MSL} + a_2 R_S + a_3 R_D + a_4 \quad (2-1)$$

where $a_1 \sim a_4$ are the regression coefficients, and the regression equation (2-1) shows the curvilinear relationship between the skin factor and the respective resistivity values.

In an optional implementation, linear regression fitting is conducted on the difference between the deep resistivity value and the micro spherical focused resistivity value, and the difference between the deep resistivity value and the shallow resistivity value, and the well test skin factor data, to obtain a second regression relational equation.

Since there is a good linear relationship between the well test skin and the difference values of the respective resistivity values, a multiple linear regression equation between the well test skin and the differences of the resistivity values can be established as follows:

$$S_2 = b_1 (R_D - R_{MSL}) + b_2 (R_D - R_S) + b_3 \quad (2-2)$$

where $b_1 \sim b_3$ are the regression coefficients, and the regression equation (2-2) shows the curvilinear relationship between the skin factor and the differences between the respective resistivity values.

In an optional implementation, the regression coefficients for the skin factor calculation model are obtained according to a least squares method.

Using the actual data of an oil and gas field A, as shown in Table 3, the above described two multiple regression equations are obtained by the least squares method.

Table 3: Multiple Linear Regression Equation between Well Test Skin S and Respective Resistivity Values R for Oil and Gas Field A

| Serial Number | Regression Relational Equation |
|---|---|
| 1 | $S_1$ = -0.7022$R_{MSL}$-1.8153$R_S$+2.7525$R_D$-9.4568 |
| 2 | $S_2$ = 0.8849($R_D$-$R_{MSL}$)+1.7357($R_D$-$R_S$)-5.3904 |

In an optional implementation, the resistivity log information and the well test skin factor data for an appraisal well of the oil and gas field are acquired;
an average error for the skin factor calculation model is calculated according to the resistivity log information and the well test skin factor data for the appraisal well of the oil and gas field; the skin factor calculation model is optimized according to the average error.

Error is a measure used to measure the model prediction against the actual result, and different models are tried by adjusting the size of the dataset and the number of the features through error analysis.

In order to verify the application effect of the well test skin factor model, in the present embodiment, two oil and gas wells in an offshore oil and gas field A in the same region, for which well test analysis has been done, are taken to perform error analysis, and the basic data of the appraisal wells are as shown in Table 4.

Table 4: Basic Data for Respective Resistivity Values of Appraisal Wells in Oil and Gas Field A

| serial number of well | micro spherical resistivity $R_{MSL}$ | shallow resistivity $R_S$ | deep resistivity $R_D$ | $R_D$-$R_{MSL}$ | $R_D$-$R_S$ |
|---|---|---|---|---|---|
| 1 | 5.8728 | 10.8087 | 15.2161 | 9.3433 | 4.4074 |
| 2 | 3.4252 | 15.5758 | 18.5495 | 15.1243 | 2.9737 |

The comparison between the actual result and the calculated result of the skin factor calculation model for the appraisal wells in the oil and gas field A is as shown in Table 5.

Table 5: Comparison Table between the Actual Result and the Calculated Result of Skin Factor Calculation Model for Appraisal Wells in Oil And Gas Field A

| serial number of well | skin factor calculation model | calculated S | actual S | error |
|---|---|---|---|---|
| 1 | $S_1 = 0.0119(R_D-R_{MSL})^2+1.1671(R_D-R_{MSL})-0.7107$ | 10.69 | 7.62 | 40.29% |
| | $S_2 = 0.0148(R_D-R_S)^2+2.3208(R_D-R_S)+0.7787$ | 11.35 | | 48.99% |
| | $S_3 = -0.7022R_{MSL}-1.8153R_S+2.7525R_D-9.4568$ | 8.68 | | 13.92% |
| | $S_4 = 0.8849(R_D-R_{MSL})+1.7375(R_D-R_S)-5.3904$ | 10.53 | | 38.25% |
| 2 | $S_1 = 0.0119(R_D-R_{MSL})^2+1.1671(R_D-R_{MSL})-0.7107$ | 19.66 | 8.99 | 118.72% |
| | $S_2 = 0.0148(R_D-R_S)^2+2.3208(R_D-R_S)+0.7787$ | 7.81 | | 13.12% |
| | $S_3 = -0.7022R_{MSL} -1.8153R_S+2.7525R_D -9.4568$ | 10.92 | | 21.48% |
| | $S_4 = 0.8849(R_D-R_{MSL})+1.7375(R_D-R_S)-5.3904$ | 13.16 | | 46.38% |

As can be known from Table 5, both the skin factor polynomial calculation model and the multiple linear regression model can yield effective skin factor results, and the polynomial model S2 and the multiple linear regression model S3 exhibit low averaged errors of about 31.1%((48.99%+13.12%)/2=31.1%) and 17.7%((13.92% +21.48%)/2=17.7%), respectively, and have good prediction effects.

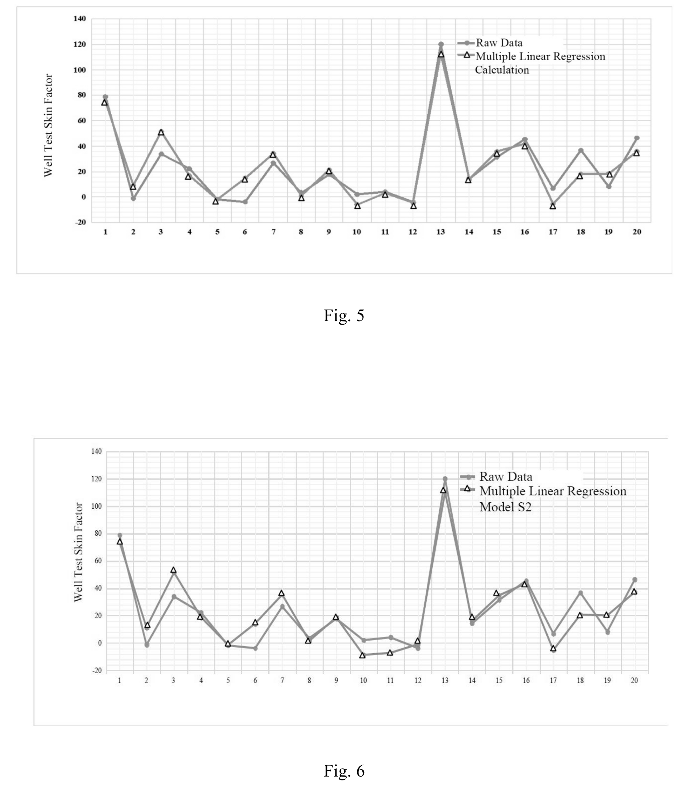

The comparison effects between the skin factor calculated according to the skin factor calculation model and the actual skin factor are as shown in FIG. 5 and FIG. 6, which indicate that the skin factor calculation model has a good fitting degree.

Step S203, calculating the skin factor of a well to be tested in the oil and gas field according to the skin factor calculation model.

According to the solution provided by the above described embodiment of the present disclosure, a difference between the deep resistivity value and the micro spherical focused resistivity value and a difference between the deep resistivity value and the shallow resistivity value are calculated according to the resistivity log information; and the skin factor calculation model is established according to the deep resistivity value, the shallow resistivity value, the micro spherical focused resistivity value, the difference between the deep resistivity value and the micro spherical focused resistivity value, the difference between the deep resistivity value and the shallow resistivity value, as well as the well test skin factor data. Thus, more accurate production capacity prediction is further provided for the oil and gas field production and development, and the established generally applicable calculation model of the resistivity values and the skin factor has been more widely applied in some offshore oil fields, which provides better technical support for the production capacity prediction of oil and gas field production and development.

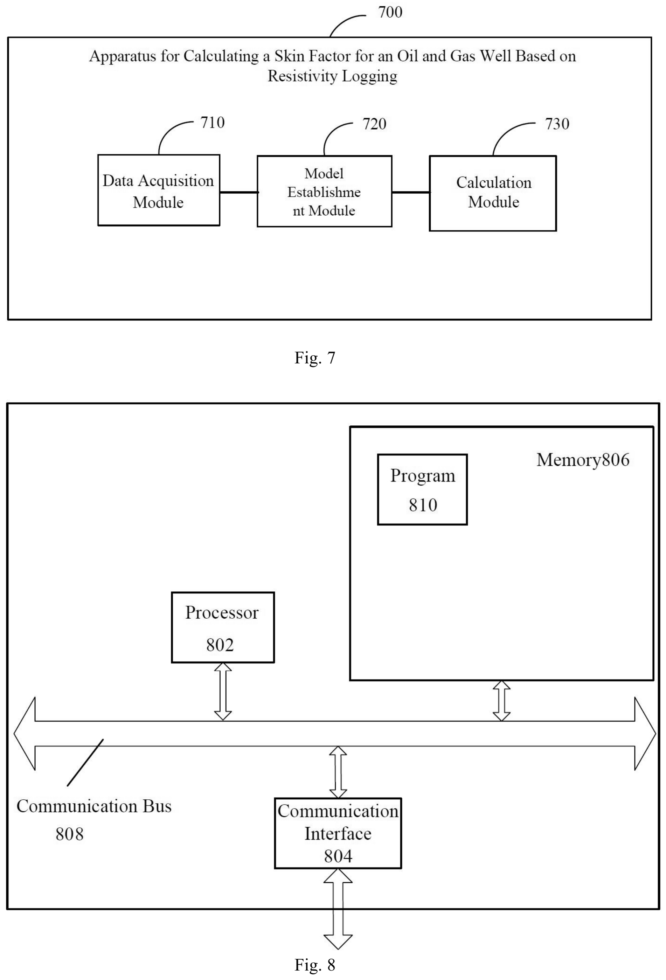

FIG. 7 illustrates a schematic structural diagram of an apparatus for calculating a skin factor for an oil and gas well based on resistivity logging according to an embodiment of the present disclosure. The apparatus 700 for calculating a skin factor for an oil and gas well based on resistivity logging includes: a data acquisition module 710, a model establishment module 720 and a calculation module 730.

The data acquisition module 710 is configured to acquire resistivity log information and well test skin factor data of a target zone of an oil and gas field;

the model establishment module 720 is configured to establish a skin factor calculation model according to the resistivity log information and the well test skin factor data;

the calculation module 730 is configured to calculate the skin factor of a well to be tested of the oil and gas field according to the skin factor calculation model.

In an optional implementation, the resistivity log information includes at least one of the following: a deep resistivity value, a shallow resistivity value, and a micro spherical focused resistivity value.

In an optional implementation, the model establishment module 720 is further configured to: calculate a difference between the deep resistivity value and the micro spherical focused resistivity value, and a difference between the deep resistivity value and the shallow resistivity value, according to the resistivity log information;

establish the skin factor calculation model according to the deep resistivity value, the shallow resistivity value, the micro spherical focused resistivity value, the difference between the deep resistivity value and the micro spherical focused resistivity value, the difference between the deep resistivity value and the shallow resistivity value, as well as the well test skin factor data. In an optional implementation, the model establishment module 720 is further configured to:

conduct linear regression fitting on the deep resistivity value, the shallow resistivity value, the micro spherical focused resistivity value and the well test skin factor data to obtain a first regression relational equation.

In an optional implementation, the model establishment module 720 is further configured to:

conduct linear regression fitting on the difference between the deep resistivity value and the micro spherical focused resistivity value, and the difference between the deep resistivity value and the shallow resistivity value, and the well test skin factor data to obtain a second regression relational equation.

In an optional implementation, the model establishment module 720 is further configured to, after establishing the skin factor calculation model,

acquire the resistivity log information and the well test skin factor data for an appraisal well of the oil and gas field;

calculate an average error for the skin factor calculation model according to the resistivity log information and the well test skin factor data for the appraisal well of the oil and gas field; optimize the skin factor calculation model according to the average error.

In an optional implementation, the model establishment module 720 is further configured to: obtain a regression coefficient for the skin factor calculation model according to a least squares method.

According to the solution provided by the above described embodiment of the present disclosure, resistivity log information and well test skin factor data of a target zone of an oil and gas field are acquired; a skin factor calculation model is established according to the resistivity log information and the well test skin factor data; and the skin factor of a well to be tested of the oil and gas field is calculated according to the skin factor calculation model. In the present disclosure, the skin factor calculation model is established by using the resistivity log information and the well test skin factor data of the target zone of the oil and gas field, and the skin factor of the well to be tested of the oil and gas field is calculated according to the model, so that more accurate production capacity prediction is provided for the field of oil and gas field production and development, and determination of various types of process parameters and calculation procedure of a complex skin factor model are avoided, which effectively solves the problem that the skin factor is difficult to be determined in the process of actual production and development.

FIG. 8 illustrates a schematic structural diagram according to an embodiment of a computing device of the present disclosure, and specific embodiments of the present disclosure do not limit the specific implementation of the computing device.

As shown in FIG. 8, the computing device may include: a processor 802, a communication interface 804, a memory 806 and a communication bus 808.

The processor 802, the communication interface 804 and the memory 806 accomplish communication with each other via the communication bus 808. The communication interface 804 is configured to communicate with network elements of other devices such as clients or other servers. The processor 802 is configured to execute a program 810, and specifically may execute the relevant steps in the embodiment of the above-described method for calculating a skin factor for an oil and gas well based on resistivity logging.

Specifically, the program 810 may include program codes, which include computer operating instructions.

The processor 802 may be a central processing unit CPU, or an Application Specific Integrated Circuit (ASIC), or one or more integrated circuits configured to implement the embodiments of the present disclosure. The one or more processors included by the computing device may be processors of the same type, such as one or more CPUs; or may be processors of different types, such as one or more CPUs and one or more ASICs.

The memory 806 is configured to store the program 810. The memory 806 may include highspeed RAM memory, or may also include non-volatile memory (non-volatile memory), such as at least one disk memory.

The program 810 may specifically be configured to cause the processor 802 to perform the following operations to:

acquire resistivity log information and well test skin factor data of a target zone of an oil and gas field;

establish a skin factor calculation model according to the resistivity log information and the well test skin factor data;

calculate the skin factor of a well to be tested of the oil and gas field according to the skin factor calculation model.

In an optional implementation, the resistivity log information includes at least one of the following: a deep resistivity value, a shallow resistivity value, and a micro spherical focused resistivity value.

In an optional implementation, the program 810 causes the processor to perform the following operations to:

calculate a difference between the deep resistivity value and the micro spherical focused resistivity value, and a difference between the deep resistivity value and the shallow resistivity value, according to the resistivity log information;

establish the skin factor calculation model according to the deep resistivity value, the shallow resistivity value, the micro spherical focused resistivity value, the difference between the deep resistivity value and the micro spherical focused resistivity value, the difference between the deep resistivity value and the shallow resistivity value, as well as the well test skin factor data.

In an optional implementation, the program 810 causes the processor to perform the following operation to: conduct linear regression fitting on the deep resistivity value, the shallow resistivity value, the micro spherical focused resistivity value and the well test skin factor data to obtain a first regression relational equation.

In an optional implementation, the program 810 causes the processor to perform the following operation to: conduct linear regression fitting on the difference between the deep resistivity value and the micro spherical focused resistivity value, the difference between the deep resistivity value and the shallow resistivity value, and the well test skin factor data, to obtain a second regression relational equation.

In an optional implementation, the program 810 causes the processor to after establishing the skin factor calculation model, perform the following operations to:

acquire the resistivity log information and the well test skin factor data for an appraisal well of the oil and gas field;

calculate an average error for the skin factor calculation model according to the resistivity log information and the well test skin factor data for the appraisal well of the oil and gas field;

optimize the skin factor calculation model according to the average error.

In an optional implementation, the program 810 causes the processor to perform the following operation to: obtain a regression coefficient for the skin factor calculation model according to a least squares method.

According to the solution provided by the above described embodiment of the present disclosure, resistivity log information and well test skin factor data of a target zone of an oil and gas field are acquired; a skin factor calculation model is established according to the resistivity log information and the well test skin factor data; and the skin factor of a well to be tested of the oil and gas field is calculated according to the skin factor calculation model. In the present disclosure, the skin factor calculation model is established by using the resistivity log information and the well test skin factor data of the target zone of the oil and gas field, and the skin factor of the well to be tested of the oil and gas field is calculated according to the model, so that more accurate production capacity prediction is provided for the field of oil and gas field production and development, and determination of various types of process parameters and calculation procedure of a complex skin factor model are avoided, which effectively solves the problem that the skin factor is difficult to be determined in the process of actual production and development.

An embodiment of the present disclosure provides a non-volatile computer readable storage medium, in which at least one executable instruction is stored, wherein the computer executable instruction may execute the method for calculating a skin factor for an oil and gas well based on resistivity in any of the above method embodiments.

The algorithms or displays provided herein are not inherently associated with any particular computer, virtual system, or other device. Various general-purpose systems may also be used in conjunction with the illustrative teachings herein. Structure required to construct such systems are apparent according to the above description. Furthermore, the embodiments of the present disclosure are not directed to any particular programming language. It should be appreciated that a variety of programming languages may be utilized to implement the contents of the present disclosure as described herein, and that the descriptions of particular languages given above are intended to disclose the best embodiments of the present disclosure.

A large number of specific details are described in the specification provided herein. However, it can be appreciated that the embodiments of the present disclosure can be practiced without these specific details. In some instances, methods, structures and techniques, that are well known, are not shown in detail so as not to obscure the understanding of the present specification.

Similarly, it should be appreciated that in order to streamline the present disclosure and aid in understanding one or more of the various disclosed aspects, in the above description of the exemplary embodiments of the present disclosure, the respective features of the embodiments of the present disclosure have sometimes been grouped together into a single embodiment, figure, or description thereof. However, the disclosed method should not be construed as reflecting an intent that the present disclosure, for which protection is sought, requires more features than those explicitly disclosed in each claim. More precisely, as reflected in the claims in the following, the features in them is fewer than the features in a single embodiment disclosed previously. Therefore, the claims that follow a specific embodiment are thereby explicitly incorporated into that specific embodiment, wherein each claim itself serves as a separate embodiment of the present disclosure.

Those skilled in the art can appreciate that it is possible to adaptively change the modules in the device in an embodiment and provide them in one or more devices that are different from the embodiment. It is possible to combine modules or units or components of an embodiment into a single module or unit or component, as well as furthermore to divide them into a plurality of sub-modules or sub-units or sub-components. Except that at least some of such features and/or processes or units are mutually exclusive, any combination may be employed to combine all features disclosed in the present specification (including accompanying claims, abstract, and accompanying drawings) and all processes or units of any method or apparatus disclosed. Unless otherwise explicitly stated, each feature disclosed in the present specification (including the accompanying claims, abstract, and accompanying drawings) may be replaced by an alternative feature that provides the same, equivalent, or similar purpose.

Furthermore, those skilled in the art can appreciate that although some embodiments herein include some features included in other embodiments, combinations of features of different embodiments are meant to be within the scope of the present disclosure and form different embodiments. For example, in the claims below, any one of the embodiments for which protection are sought may be used in any combination.

Various component embodiments of the present disclosure may be implemented in hardware, or in software modules running on one or more processors, or in a combination thereof. Those skilled in the art should appreciate that a microprocessor or a digital signal processor (DSP) may be used in practice to implement some or all of the functionality of some or all of the components according to the embodiments of the present disclosure. The present disclosure may also be implemented as a device or apparatus program (e.g., a computer program and a computer program product) for executing a part or all of the method described herein. Such a program implementing the present disclosure may be stored on a computer readable medium or may have the form of one or more signals. Such signals may be available by downloading from an Internet site, or may be provided on a carrier signal, or may be provided in any other form.

It should be noted that the above described embodiments are illustrative of the present disclosure rather than a limitation of the present disclosure, and that those skilled in the art may devise replacement embodiments without departing from the scope of the appended claims. In the claims, any reference symbol, which is located between parentheses, should not be construed as a limitation of the claims. The word "comprising" does not exclude the existence of elements or steps, which are not listed in the claim. The word "one" or "a" before an element does not exclude the existence of a plurality of such elements. The present disclosure may be realized with the aid of hardware including a number of different elements and with the aid of an appropriately programmed computer. In a unit claim enumerating a number of apparatuses, a number of these apparatuses may be specifically embodied by means of the same hardware item. The use of the words first, second, and third etc. does not indicate any order. These words may be interpreted as names. The steps in the above described embodiments should not be construed as limiting the order of execution except as specifically stated.

**Claims**

1. A method for calculating a skin factor for an oil and gas well based on resistivity logging, comprising:

   acquiring resistivity log information and well test skin factor data of a target zone of an oil and gas field;
   establishing a skin factor calculation model according to the resistivity log information and the well test skin factor data;
   calculating the skin factor of a well to be tested of the oil and gas field according to the skin factor calculation model.

2. The method for calculating the skin factor for the oil and gas well based on resistivity logging according to claim 1, wherein the resistivity log information comprises at least one of the following: a deep resistivity value, a shallow resistivity value, and a micro spherical focused resistivity value.

3. The method for calculating the skin factor for the oil and gas well based on resistivity logging according to claim 2, wherein the establishing the skin factor calculation model according to the resistivity log information and the well test skin factor data further comprises:

calculating a difference between the deep resistivity value and the micro spherical focused resistivity value and a difference between the deep resistivity value and the shallow resistivity value, according to the resistivity log information;
establishing the skin factor calculation model according to the deep resistivity value, the shallow resistivity value, the micro spherical focused resistivity value, the difference between the deep resistivity value and the micro spherical focused resistivity value, the difference between the deep resistivity value and the shallow resistivity value, and the well test skin factor data.

4. The method for calculating the skin factor for the oil and gas well based on resistivity logging according to claim 2, wherein the establishing the skin factor calculation model according to the resistivity log information and the well test skin factor data further comprises:
conducting linear regression fitting on the deep resistivity value, the shallow resistivity value, the micro spherical focused resistivity value and the well test skin factor data to obtain a first regression relational equation.

5. The method for calculating the skin factor for the oil and gas well based on resistivity logging according to claim 3, wherein the establishing the skin factor calculation model according to the resistivity log information and the well test skin factor data further comprises:
conducting linear regression fitting on the difference between the deep resistivity value and the micro spherical focused resistivity value, the difference between the deep resistivity value and the shallow resistivity value, and the well test skin factor data to obtain a second regression relational equation.

6. The method for calculating the skin factor for the oil and gas well based on resistivity logging according to claim 1, wherein the method further comprises:

acquiring the resistivity log information and the well test skin factor data for an appraisal well of the oil and gas field;
calculating an average error for the skin factor calculation model according to the resistivity log information and the well test skin factor data for the appraisal well of the oil and gas field;
optimizing the skin factor calculation model according to the average error.

7. The method for calculating the skin factor for the oil and gas well based on resistivity logging according to claim 4 or 5, wherein the establishing the skin factor calculation model according to the resistivity log information and the well test skin factor data further comprises:
obtaining a regression coefficient for the skin factor calculation model according to a least squares method.

8. An apparatus for calculating a skin factor for an oil and gas well based on resistivity logging, comprising:

a data acquisition module configured to acquire resistivity log information and well test skin factor data of a target zone of an oil and gas field;
a model establishment module configured to establish a skin factor calculation model according to the resistivity log information and the well test skin factor data;
a calculation module configured to calculate the skin factor of a well to be tested of the oil and gas field according to the skin factor calculation model.

9. A computing device, comprising: a processor, a memory, a communication interface and a communication bus, wherein the processor, the memory and the communication interface accomplish communication with each other via the communication bus;
the memory is configured to store at least one executable instruction, wherein the executable instruction causes the processor to perform operations corresponding to a method for calculating a skin factor for an oil and gas well based on resistivity logging as claimed in any one of claims 1-7.

10. A non-volatile computer readable storage medium, in which at least one executable instruction is stored, wherein the executable instruction causes a processor to perform operations corresponding to a method for calculating a skin factor for an oil and gas well based on resistivity logging as claimed in any one of claims 1-7.

11. A computer program product, which comprises a computing program stored on a non-volatile computer readable storage medium, wherein the computer program comprises program instructions which, when executed by a processor, cause the processor to perform operations corresponding to a method for calculating a skin factor for an oil and gas well based on resistivity logging as claimed in any one of claims 1-7.

Fig. 3

Fig. 4

Fig. 5

Fig. 6

700

Apparatus for Calculating a Skin Factor for an Oil and Gas Well Based on
Resistivity Logging

710

Data Acquisition
Module

720

Model
Establishme
nt Module

730

Calculation
Module

Fig. 7

Memory806

Program
810

Processor
802

Communication Bus
808

Communication
Interface
804

Fig. 8

## INTERNATIONAL SEARCH REPORT

International application No.

**PCT/CN2023/106889**

### A.    CLASSIFICATION OF SUBJECT MATTER

E21B47/00(2012.01)i

According to International Patent Classification (IPC) or to both national classification and IPC

### B.    FIELDS SEARCHED

Minimum documentation searched (classification system followed by classification symbols)

IPC: E21B

Documentation searched other than minimum documentation to the extent that such documents are included in the fields searched

Electronic data base consulted during the international search (name of data base and, where practicable, search terms used)

CNTXT, CJFD, WPABSC, VCN, ENTXT, VEN: 中海油田服务股份有限公司, 电阻率, 测井, 油气井, 表皮因子, 表皮系数, 计算, 模型, 深, 浅, 微型球形, 差, 回归拟合, 优化, 误差, resistivity, logging, oil, gas, well, skin, factor, calculate, model, difference, fitting, error

### C.    DOCUMENTS CONSIDERED TO BE RELEVANT

| Category* | Citation of document, with indication, where appropriate, of the relevant passages | Relevant to claim No. |
|---|---|---|
| PX | CN 116291380 A (CHINA OILFIELD SERVICES LIMITED) 23 June 2023 (2023-06-23) description, paragraphs 43-143, and figures 1-8 | 1-11 |
| X | 郑力会等 (ZHENG, Lihui et al.). "利用常规测井信息计算储层伤害表皮系数初探 (Preliminary Study on Calculation of Formation Damage Skin Factor by Conventional Well-Logging Data)" 油气井测试 (Well Testing), Vol. 19, No. 02, 25 April 2010 (2010-04-25), pages 32-35 | 1-8 |
| Y | 郑力会等 (ZHENG, Lihui et al.). "利用常规测井信息计算储层伤害表皮系数初探 (Preliminary Study on Calculation of Formation Damage Skin Factor by Conventional Well-Logging Data)" 油气井测试 (Well Testing), Vol. 19, No. 2, 25 April 2010 (2010-04-25), pages 32-35 | 9-11 |
| Y | CN 114382466 A (CHINA OILFIELD SERVICES LIMITED) 22 April 2022 (2022-04-22) description, paragraphs 53-63 and 69, and figure 4 | 9-11 |

✓ Further documents are listed in the continuation of Box C.       ✓ See patent family annex.

| | |
|---|---|
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **09 October 2023** | **22 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/106889**

## C.   DOCUMENTS CONSIDERED TO BE RELEVANT

| Category* | Citation of document, with indication, where appropriate, of the relevant passages | Relevant to claim No. |
|---|---|---|
| A | CN 105069303 A (CHINA NATIONAL OFFSHORE OIL CORPORATION et al.) 18 November 2015 (2015-11-18)<br>entire document | 1-11 |
| A | CN 112213797 A (CHINA UNIVERSITY OF PETROLEUM (EAST CHINA)) 12 January 2021 (2021-01-12)<br>entire document | 1-11 |
| A | CN 114723155 A (CHINA OILFIELD SERVICES LIMITED) 08 July 2022 (2022-07-08)<br>entire document | 1-11 |
| A | WO 2019040049 A1 (HALLIBURTON ENERGY SERVICES, INC.) 28 February 2019 (2019-02-28)<br>entire document | 1-11 |

Form PCT/ISA/210 (second sheet) (July 2022)

## INTERNATIONAL SEARCH REPORT
### Information on patent family members

International application No.

**PCT/CN2023/106889**

| Patent document cited in search report | | | Publication date (day/month/year) | Patent family member(s) | | | Publication date (day/month/year) |
|---|---|---|---|---|---|---|---|
| CN | 116291380 | A | 23 June 2023 | None | | | |
| CN | 114382466 | A | 22 April 2022 | None | | | |
| CN | 105069303 | A | 18 November 2015 | None | | | |
| CN | 112213797 | A | 12 January 2021 | None | | | |
| CN | 114723155 | A | 08 July 2022 | None | | | |
| WO | 2019040049 | A1 | 28 February 2019 | FR | 3070415 | A1 | 01 March 2019 |
| | | | | AR | 112615 | A1 | 20 November 2019 |
| | | | | SA | 519410882 | B1 | 02 March 2023 |
| | | | | US | 2020271820 | A1 | 27 August 2020 |
| | | | | US | 10914857 | B2 | 09 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023103559153